# EUROPÄISCHE PATENTSCHRIFT

(11) **EP 4 239 618 B1**
(45) Veröffentlichungstag und Bekanntmachung des Hinweises auf die Patenterteilung: **02.12.2026**
(21) Anmeldenummer: 22159424.5
(22) Anmeldetag: 01.03.2022
(51) Int. Cl.: G09B 9/04, G09B 5/04, A63F 13/00, A63F 13/54, G10K 15/02, A63F 13/803, A63F 13/90, H04R 1/28, G09B 25/00, G10K 11/08

(54) **FAHRZEUGSIMULATOR**
VEHICLE SIMULATOR
SIMULATEUR DE VÉHICULE

(43) Veröffentlichungstag der Anmeldung: 06.09.2023
(73) Patentinhaber: MAGNA STEYR Fahrzeugtechnik GmbH & Co KG, 8041 Graz (AT)
(72) Erfinder: Fankhauser, Christoph, 8071 Hausmannstätten (AT); GRABNER, Gottfried, 8261 Sinabelkirchen (AT); KAUERMANN, Klaus, 8323 St. Marein (AT); NITZ, Johannes, 8010 Graz (AT)
(74) Vertreter: Zangger, Bernd

(56) Entgegenhaltungen:
- CN-B- 109 164 167
- DE-A1- 102008 040 139
- DE-A1- 102020 112 680
- JP-A- 2002 311 810
- RU-C2- 2 369 909
- SU-A1- 1 037 323
- WANG PING ET AL: "Interactive and intelligent vehicle driving simulator based on network communication", INTELLIGENT VEHICLES SYMPOSIUM, 2009 IEEE, IEEE, PISCATAWAY, NJ, USA, 3 June 2009 (2009-06-03), pages 646 - 651, XP031489916, ISBN: 978-1-4244-3503-6

## Beschreibung

### Gebiet der Erfindung

Die vorliegende Erfindung betrifft einen Fahrzeugsimulator, umfassend eine Fahrzeugkabine die einen Benutzer des Fahrzeugsimulators zumindest abschnittsweise umgibt.

### Stand der Technik

Fahrzeugsimulatoren, die für einen Benutzer in einer stehenden Vorrichtung ein fahrendes Fahrzeug simulieren, sind hinlänglich bekannt. Solche Fahrzeugsimulatoren können eine Fahrzeugkabine umfassen, die einen Benutzer der Fahrzeugsimulation zumindest abschnittsweise umgibt. Der Benutzer befindet sich also innerhalb der Fahrzeugkabine, so dass dieser den Eindruck hat, sich im Innenraum eines Fahrzeuges zu befinden. Dem Benutzer können dann Videosignale und Audiosignale eingespielt werden, die das Erlebnis sich in einem entsprechenden Fahrzeuginnenraum während einer Fahrt zu befinden simulieren.

Nachteilig an solchen Fahrzeugsimulatoren ist, dass auch bei guten Video- und Audioeinspielungen der Eindruck des Benutzers üblicherweise noch wenig realistisch ist.

Aus der DE 10 2020 112680 A1 ist ein Geräuschsimulator für ein Kraftfahrzeug bekannt, aufweisend zumindest die folgenden Komponenten: ein Gehäuse, welches einen Innenraum umschließt; zumindest eine in dem Innenraum des Gehäuses angeordnete elektrisch ansteuerbare Geräuschquelle; und einen Schallauslass in dem Gehäuse, wobei das Gehäuse als Resonanzkörper für zumindest eine der Geräuschquellen eingerichtet ist, wobei das Gehäuse einen Werkstoff für Endrohre eines Auspuffsystems umfasst.

Dokument RU 2 369 909 C2 zeigt ein Verfahren zur Simulation von psychophysiologischen Effekten in einem Simulator, das darin besteht, dass in Echtzeit die Parameter des Objektverhaltens berechnet werden, N physikalische Effekte synthetisiert und in Empfindungen der räumlichen Bewegung, visuelle Informationen innerhalb und außerhalb der Kabine, auditive und taktil-kinästhetische Informationen, die den Betrieb des kontrollierten Objekts begleiten, umgewandelt werden.

### Zusammenfassung der Erfindung

Es ist eine Aufgabe der Erfindung, einen Fahrzeugsimulator der genannten Art in dieser Hinsicht zu verbessern und insbesondere einen Fahrzeugsimulator anzugeben, der für einen Benutzer einen realistischeren Eindruck simuliert, sich in einem fahrenden Fahrzeuginnenraum zu befinden.

Die Lösung der Aufgabe erfolgt durch einen Fahrzeugsimulator mit den Merkmalen gemäß Anspruch 1.

Der Fahrzeugsimulator umfasst eine Fahrzeugkabine die einen Benutzer des Fahrzeugsimulators zumindest abschnittsweise umgibt, umfassend zumindest eine Lautsprecherbox zur Abstrahlung eines simulierten Betriebsgeräusches eines Fahrzuges in die Fahrzeugkabine, wobei die Lautsprecherbox eine Bassreflexbox ist, die zur Abstrahlung von Infraschallwellen optimiert ist.

Erfindungsgemäß weist ein Fahrzeugsimulator, der eine Kabine aufweist, in welcher sich der Benutzer befindet, um den Eindruck zu haben, in einem Fahrzeuginnenraum zu sein, zumindest eine Bassreflexbox auf, die so konstruiert wurde, dass sie speziell zur Abstrahlung von Infraschallwellen eingerichtet ist.

Dazu weist erfindungsgemäß die Bassreflexbox ein Gehäuse auf, dass mit einer Abstimmfrequenz im Infraschallbereich ausgestattet ist. Auch der Lautsprecher der Bassreflexbox kann für derart tiefe Töne optimiert sein.

Erfindungsgemäß wurde festgestellt, dass der Eindruck des Benutzers in einer derartigen Fahrzeugkabine eines Fahrzeugsimulators wesentlich realistischer ist als in üblichen Fahrzeugsimulatoren, da die nicht hörbaren tiefen Frequenzen entsprechend zum Gesamteindruck des Benutzers beitragen. Die Infraschallwellen aus der Bassreflexbox wechselwirken mit der Fahrzeugkabine derart, dass die Infraschallwellen ausreichend verstärkt werden, so dass sie für den Benutzer wahrnehmbar sind.

Der Fahrzeugsimulator, insbesondere dessen Fahrzeugkabine, kann bevorzugt durch äußere Kräfte auch mechanisch, elektrisch und/oder pneumatisch bewegt werden, um ein realistisches Fahrgefühl zu erzeugen.

Der Fahrzeugsimulator, insbesondere dessen Fahrzeugkabine, kann beispielsweise mit einem Sitz und/oder mit einem Lenkrad und/oder mit einer Instrumententafel und/oder mit Pedalen und/oder mit einem Schalthebel ausgestattet sein.

Der Fahrzeugsimulator kann in der Art eines Computerspielautomaten zur Unterhaltung dienen.

Der Fahrzeugsimulator kann auch als Prüfstand, beispielsweise für den Automobilbau, ausgebildet sein.

Vorzugsweise ist die Bassreflexbox zur Abstrahlung von Infraschallwellen von 15 - 19 Hz optimiert ist, bevorzugt von 16 - 18 Hz, besonders bevorzugt von ca. 17 Hz, durch eine entsprechende Abstimmfrequenz des Gehäuses der Bassreflexbox.

Bevorzugt ist die Fahrzeugkabine dazu ausgebildet, die von der Bassreflexbox abgestrahlten Infraschallwellen zu verstärken und/oder durch die von der Bassreflexbox abgestrahlten Infraschallwellen in Schwingungen versetzt zu werden.

Der Fahrzeugsimulator umfasst vorzugsweise zumindest eine, bevorzugt mehrere, weitere Lautsprecherboxen zur Abstrahlung eines simulierten Betriebsgeräusches eines Fahrzuges in die Fahrzeugkabine, wobei die weiteren Lautsprecherboxen Monitorlautsprecher und/oder Fullrangeboxen und/oder Topboxen sind.

Bevorzugt wird die Bassreflexbox durch einen ersten Verstärker betrieben, der ausschließlich das Signal für die Bassreflexbox liefert, und die weiteren Lautsprecherboxen werden durch zumindest einen vom ersten Verstärker verschiedenen zweiten Verstärker betrieben.

Die Bassreflexbox und die weiteren Lautsprecherboxen werden bevorzugt durch einen digitalen Signalprozessor (DSP) angesteuert, der eine Frequenzweiche zur frequenzmäßigen Trennung der Bassreflexbox ausbildet und/oder eine Pegel- und/oder Laufzeit- und/oder Frequenzganganpassung der Lautsprecherboxen vornimmt.

Vorzugsweise umfasst der Fahrzeugsimulator ein Steuergerät zur Wiedergabe des simulierten Betriebsgeräusches eines Fahrzeuges und bevorzugt auch zur Widergabe eines simulierten Videosignals des Fahrzeugs, wobei das Steuergerät zur Wiedergabe des simulierten Betriebsgeräusches umfassend Infraschallwellen ausgebildet ist.

Der Fahrzeugsimulator ist bevorzugt als Prüfstand ausgebildet, beispielsweise für den Automobilbau, und kann einen Messcomputer (8) zur Erfassung der simulierten Betriebsgeräusche, insbesondere der abgestrahlten Infraschallwellen, und/oder der subjektiven Geräuschwahrnehmung des Benutzers (2), umfassen.

### Kurzbeschreibung der Zeichnungen

Die Erfindung wird im Folgenden beispielhaft unter Bezugnahme auf die Zeichnungen beschrieben.
- Fig.: ist eine schematische Ansicht von oben eines erfindungsgemäßen Fahrzeugsimulators.

### Detaillierte Beschreibung der Erfindung

In der Fig. ist ein erfindungsgemäßer Fahrzeugsimulator schematisch dargestellt, in einer Ansicht von oben.

Der Fahrzeugsimulator umfasst eine Fahrzeugkabine 1, die einen Benutzer 2 der Fahrzeugsimulation im Wesentlichen vollständig umgibt, so dass der Innenraum eines Fahrzeuges für den Benutzer 2 nachgebildet wird.

Der Innenraum, also die Fahrzeugkabine 1, weist typische Elemente eines Fahrzeuginnenraums auf, beispielsweise zumindest einen Fahrersitz, ein Lenkrad, eine Instrumententafel, Pedale und/oder einen Schalthebel. Zur optischen Anzeige einer Fahrsituation kann beispielsweise mindestens ein Display und/oder mindestens eine Virtual-Reality Brille vorgesehen sein.

Mehrere Lautsprecherboxen 3, 4 sind zur Abstrahlung eines simulierten Betriebsgeräusches eines Fahrzuges in die Fahrzeugkabine 1 eingerichtet. Mindestens eine der Lautsprecherboxen 3, 4 ist eine Bassreflexbox 3, die zur Abstrahlung von Infraschallwellen optimiert ist. Die Bassreflexbox 3 befindet sich bevorzugt in üblicher "Fahrrichtung" der Fahrzeugkabine 1 hinter dem Benutzer 2.

Die Bassreflexbox 3 ist zur Abstrahlung von Infraschallwellen von ca. 17 Hz optimiert, durch eine entsprechende Abstimmfrequenz des Gehäuses der Bassreflexbox 3. Die Fahrzeugkabine 1 wird durch die von der Bassreflexbox 3 abgestrahlten Infraschallwellen in Schwingungen versetzt und verstärkt die von der Bassreflexbox 3 abgestrahlten Infraschallwellen.

Weitere Lautsprecherboxen 4 sind zur Abstrahlung der weniger tiefen Anteile eines simulierten Betriebsgeräusches eines Fahrzuges in die Fahrzeugkabine 1 eingerichtet.

Die Bassreflexbox 3 wird durch einen ersten Verstärker 5 betrieben, der bevorzugt eine hohe Leistung aufweist, beispielsweise ca. 2 mal 1000 Watt.

Die weiteren Lautsprecherboxen 4 werden durch einen vom ersten Verstärker 5 verschiedenen zweiten Verstärker 6 betrieben, der bevorzugt eine geringere Leistung aufweist, als der erste Verstärker 5 - beispielsweise ca. 4 mal 150 Watt.

Die Bassreflexbox 3 und die weiteren Lautsprecherboxen 4 werden durch einen digitalen Signalprozessor (DSP) 7 angesteuert, der unter anderem eine Frequenzweiche zur frequenzmäßigen Trennung der Bassreflexbox 3 von den weiteren Lautsprecherboxen 4 ausbildet.

Der dargestellte Fahrzeugsimulator ist als Prüfstand ausgebildet und weist einen Messcomputer 8 zur Erfassung der simulierten Betriebsgeräusche, insbesondere der abgestrahlten Infraschallwellen, und/oder der subjektiven Geräuschwahrnehmung des Benutzers 2 auf, die dieser beispielsweise an einem Bildschirm manuell erfassen kann.

### Bezugszeichenliste

- 1: Fahrzeugkabine
- 2: Benutzer
- 3: Bassreflexbox
- 4: weitere Lautsprecherbox
- 5: erster Verstärker
- 6: zweiter Verstärker
- 7: digitaler Signalprozessor (DSP)
- 8: Messcomputer

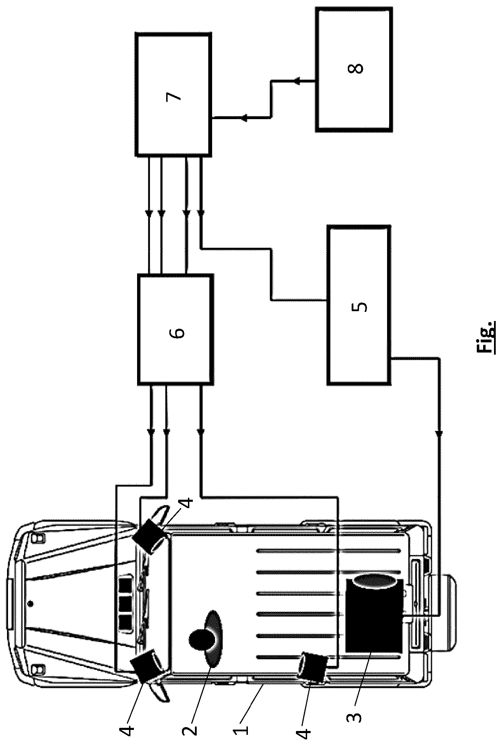

## Patentansprüche

1. Fahrzeugsimulator, umfassend eine Fahrzeugkabine (1) die einen Benutzer (2) des Fahrzeugsimulators zumindest abschnittsweise umgibt, umfassend zumindest eine Lautsprecherbox (3, 4) zur Abstrahlung eines simulierten Betriebsgeräusches eines Fahrzuges in die Fahrzeugkabine (1),
**dadurch gekennzeichnet, dass** die Lautsprecherbox (3, 4) eine Bassreflexbox (3) ist, die zur Abstrahlung von Infraschallwellen optimiert ist, wobei die Bassreflexbox ein Gehäuse aufweist, das mit einer Abstimmfrequenz im Infraschallbereich ausgestattet ist.

2. Fahrzeugsimulator nach Anspruch 1,
**dadurch gekennzeichnet, dass** die Bassreflexbox (3) zur Abstrahlung von Infraschallwellen von 15 - 19 Hz optimiert ist, bevorzugt von 16 - 18 Hz, besonders bevorzugt von ca. 17 Hz, durch eine entsprechende Abstimmfrequenz des Gehäuses der Bassreflexbox (3).

3. Fahrzeugsimulator nach zumindest einem der vorhergehenden Ansprüche,
**dadurch gekennzeichnet, dass** die Fahrzeugkabine (1) dazu ausgebildet ist, die von der Bassreflexbox (3) abgestrahlten Infraschallwellen zu verstärken und/oder durch die von der Bassreflexbox (3) abgestrahlten Infraschallwellen in Schwingungen versetzt zu werden.

4. Fahrzeugsimulator nach zumindest einem der vorhergehenden Ansprüche,
**dadurch gekennzeichnet, dass** der Fahrzeugsimulator zumindest eine, bevorzugt mehrere, weitere Lautsprecherboxen (4) zur Abstrahlung eines simulierten Betriebsgeräusches eines Fahrzuges in die Fahrzeugkabine (1) umfasst, wobei die weiteren Lautsprecherboxen (4) Monitorlautsprecher und/oder Fullrangeboxen und/oder Topboxen sind.

5. Fahrzeugsimulator nach Anspruch 4,
**dadurch gekennzeichnet, dass** die Bassreflexbox (3) durch einen ersten Verstärker (5) betrieben wird und die weiteren Lautsprecherboxen (4) durch einen vom ersten Verstärker (5) verschiedenen zweiten Verstärker (6) betrieben werden.

6. Fahrzeugsimulator nach Anspruch 4 oder 5,
**dadurch gekennzeichnet, dass** die Bassreflexbox (3) und die weiteren Lautsprecherboxen (4) durch einen digitalen Signalprozessor (DSP) (7) angesteuert werden, der eine Frequenzweiche zur frequenzmäßigen Trennung der Bassreflexbox (3) ausbildet und/oder eine Pegel- und/oder Laufzeit- und/oder Frequenzganganpassung der Lautsprecherboxen (3, 4) vornimmt.

7. Fahrzeugsimulator nach zumindest einem der vorhergehenden Ansprüche,
**dadurch gekennzeichnet, dass** der Fahrzeugsimulator ein Steuergerät zur Wiedergabe des simulierten Betriebsgeräusches eines Fahrzeuges und bevorzugt auch zur Widergabe eines simulierten Videosignals des Fahrzeugs umfasst, wobei das Steuergerät zur Wiedergabe des simulierten Betriebsgeräusches umfassend Infraschallwellen ausgebildet ist.

8. Fahrzeugsimulator nach zumindest einem der vorhergehenden Ansprüche,
**dadurch gekennzeichnet, dass** der Fahrzeugsimulator als Prüfstand, beispielsweise für den Automobilbau, ausgebildet ist und einen Messcomputer (8) zur Erfassung der simulierten Betriebsgeräusche, insbesondere der abgestrahlten Infraschallwellen, und/oder der subjektiven Geräuschwahrnehmung des Benutzers (2), umfasst. -.-.-.

## Claims

1. Vehicle simulator, comprising a vehicle cabin (1) which surrounds a user (2) of the vehicle simulator at least in sections, comprising at least one loudspeaker box (3, 4) for emitting a simulated operating noise of a vehicle into the vehicle cabin (1),
**characterized in that** the loudspeaker box (3, 4) is a bass reflex box (3) which is optimized for emitting infrasound waves, wherein the bass reflex box has a housing which is provided with a tuning frequency in the infrasound range.

2. Vehicle simulator according to Claim 1,
**characterized in that** the bass reflex box (3) is optimized for emitting infrasound waves of 15-19 Hz, preferably of 16-18 Hz, particularly preferably of approximately 17 Hz, by means of a corresponding tuning frequency of the housing of the bass reflex box (3).

3. Vehicle simulator according to at least one of the preceding claims,
**characterized in that** the vehicle cabin (1) is designed to amplify the infrasound waves emitted by the bass reflex box (3) and/or to be caused to oscillate by the infrasound waves emitted by the bass reflex box (3).

4. Vehicle simulator according to at least one of the preceding claims,
**characterized in that** the vehicle simulator comprises at least one further loudspeaker box (4), preferably a plurality thereof, for emitting a simulated operating noise of a vehicle into the vehicle cabin (1), wherein the further loudspeaker boxes (4) are monitor loudspeakers and/or full-range boxes and/or top boxes.

5. Vehicle simulator according to Claim 4,
**characterized in that** the bass reflex box (3) is operated by a first amplifier (5) and the further loudspeaker boxes (4) are operated by a second amplifier (6) different from the first amplifier (5).

6. Vehicle simulator according to Claim 4 or 5,
**characterized in that** the bass reflex box (3) and the further loudspeaker boxes (4) are controlled by a digital signal processor (DSP) (7) which forms a crossover for frequency-based division of the bass reflex box (3) and/or performs level and/or delay time and/or frequency response adaptation of the loudspeaker boxes (3, 4).

7. Vehicle simulator according to at least one of the preceding claims,
**characterized in that** the vehicle simulator comprises a control device for reproducing the simulated operating noise of a vehicle and preferably also for reproducing a simulated video signal of the vehicle, wherein the control device is designed to reproduce the simulated operating noise comprising infrasound waves.

8. Vehicle simulator according to at least one of the preceding claims,
**characterized in that** the vehicle simulator is designed as a test bench, for example for automobile construction, and comprises a measuring computer (8) for measuring the simulated operating noises, in particular the emitted infrasound waves, and/or the subjective noise perception of the user (2).

## Revendications

1. Simulateur de véhicule comprenant un habitacle de véhicule (1), qui entoure au moins par sections un utilisateur (2) du simulateur de véhicule, comprenant au moins un caisson de haut-parleur (3, 4) pour l'émission d'un bruit simulé de fonctionnement d'un véhicule dans l'habitacle de véhicule (1),
**caractérisé en ce que** le caisson de haut-parleur (3, 4) est un caisson bass-reflex (3) qui est optimisé pour l'émission d'ondes infrasonores, le caisson bass-reflex comportant un boîtier qui est équipé d'une fréquence d'accord dans la plage infrasonore.

2. Simulateur de véhicule selon la revendication 1,
**caractérisé en ce que** le caisson bass-reflex (3) est optimisé pour émettre des ondes infrasonores de 15 à 19 Hz, de manière préférée de 16 à 18 Hz, de manière particulièrement préférée d'environ 17 Hz, par une fréquence d'accord correspondante du boîtier du caisson bass-reflex (3).

3. Simulateur de véhicule selon au moins l'une des revendications précédentes,
**caractérisé en ce que** l'habitacle du véhicule (1) est formé pour amplifier les ondes infrasonores émises par le caisson bass-reflex (3) et/ou pour être amené en vibrations par les ondes infrasonores émises par le caisson bass-reflex (3).

4. Simulateur de véhicule selon au moins l'une des revendications précédentes,
**caractérisé en ce que** le simulateur de véhicule comprend au moins un, de manière préférée plusieurs autres caissons de haut-parleur (4) pour l'émission d'un bruit de fonctionnement simulé d'un véhicule dans l'habitacle de véhicule (1), les autres caissons de haut-parleur (4) étant des haut-parleurs de contrôle et/ou des caissons à gamme complète et/ou des caissons supérieurs.

5. Simulateur de véhicule selon la revendication 4,
**caractérisé en ce que** le caisson bass-reflex (3) fonctionne grâce à un premier amplificateur (5) et les autres caissons de haut-parleur (4) fonctionnent grâce à un deuxième amplificateur (6) différent du premier amplificateur (5).

6. Simulateur de véhicule selon la revendication 4 ou 5,
**caractérisé en ce que** le caisson bass-reflex (3) et les autres caissons de haut-parleur (4) sont pilotés par un processeur numérique de signaux (DSP) (7) qui forme un répartiteur pour la séparation de fréquence du caisson bass-reflex (3) et/ou réalise une adaptation de niveau et/ou de temps de fonctionnement et/ou de réponse en fréquence des caissons de haut-parleur (3, 4).

7. Simulateur de véhicule selon au moins l'une des revendications précédentes,
**caractérisé en ce que** le simulateur de véhicule comprend un appareil de commande pour reproduire le bruit de fonctionnement simulé d'un véhicule et de manière préférée également pour reproduire un signal vidéo simulé du véhicule, l'appareil de commande étant formé pour reproduire le bruit de fonctionnement simulé comprenant des ondes infrasonores.

8. Simulateur de véhicule selon au moins l'une des revendications précédentes,
**caractérisé en ce que** le simulateur de véhicule est formé comme un banc d'essai, par exemple pour la construction automobile, et comprend un ordinateur de mesure (8) pour détecter les bruits de fonctionnement simulés, en particulier les ondes infrasonores émises, et/ou la perception subjective du bruit de l'utilisateur (2).
